(19) Europäisches Patentamt
European Patent Office
Office européen des brevets

(11) **EP 1 909 486 B1**

(12) **EUROPEAN PATENT SPECIFICATION**

(45) Date of publication and mention
of the grant of the patent:
**27.06.2012 Bulletin 2012/26**

(51) Int Cl.:
***H04N 1/60*** (2006.01)

(21) Application number: **07116816.5**

(22) Date of filing: **20.09.2007**

(54) **Method and apparatus for performing gamut mapping between heterogeneous devices**

Verfahren und Vorrichtung zur Durchführung eines Skalenabgleichs zwischen heterogenen Geräten

Procédé et appareil pour réaliser la mise en correspondance de la gamme de couleurs entre dispositifs hétérogènes

(84) Designated Contracting States:
**DE FR GB**

(30) Priority: **29.09.2006 KR 20060096300**

(43) Date of publication of application:
**09.04.2008 Bulletin 2008/15**

(73) Proprietor: **Samsung Electronics Co., Ltd.
Suwon-si, Gyeonggi-do (KR)**

(72) Inventors:
• **Cho, Min-ki
Samsung Advanced Inst. of Technology
446-712, Gyeonggi-do (KR)**
• **Choh, Heui-keun
Samsung Advanced Inst. of Technology
446-712, Gyeonggi-do (KR)**
• **Bang, You-sun
Samsung Advanced Inst. of Technology
446-712, Gyeonggi-do (KR)**
• **Kim, Se-eun
Samsung Advanced Inst. of Technology
446-712, Gyeonggi-do (KR)**
• **Kim, Yun-tae2Samsung Advanced Inst. of
Technology
446-712, Gyeonggi-do (KR)**

(74) Representative: **Grünecker, Kinkeldey,
Stockmair & Schwanhäusser
Leopoldstrasse 4
80802 München (DE)**

(56) References cited:
**EP-A- 0 961 488          WO-A-2005/109856
US-A1- 2005 248 785          US-A1- 2006 209 325**

## Description

This application claims priority from Korean Patent Application No. 10-2006-0096300 filed on September 29, 2006 in the Korean Intellectual Property Office, the disclosure of which is incorporated herein by reference in its entirety.

BACKGROUND

1. Field of the Invention

The present invention relates to a method and apparatus to perform gamut mapping between heterogeneous devices, and more particularly, to a method and apparatus to map a color of a device to an identical or visually and sensually preferable color of another device having a different color gamut.

2. Description of the Related Art

Color input/output devices, which reproduce colors, such as monitors, cameras and printers, use different color spaces or models according to fields in which they are used. For example, in the case of a color image, printing devices use a cyan, magenta and yellow (CMY) color space, or a cyan, magenta, yellow and black (CMYK) color space while color cathode ray tube (CRT) monitors or computer graphics devices use a red, green and blue (RGB) color space. In order to define a device-independent color, which can be accurately reproduced anywhere regardless of devices, a CIE color space may be used. Major examples of the CIE color space include CIE-XYZ, CIE-Lab, CIE-Luv and CIECAMO2.

Apart from the color spaces, the color input/output devices may also have different ranges of reproducible colors, i.e., different color gamuts. Due to such differences in color gamut, the same image may look different from one color input/output device to another. Therefore, if a color signal is received from a source device having a different color gamut from that of a destination device which will reproduce the input color signal, it is required to appropriately convert the received color signal to match the color gamuts of the source and destination devices. This process is called "gamut mapping."

WO2005/109856 describes a gamut mapping process that separates a source image into RGB primary colors and converts the RGB color space into the Jch color space by using the XYZ device-independent colors space. The gamut mapping comprises for each hue leaf a rescaling of the lightness of the source device gamut on the lightness of the destination device gamut. After lightness scaling, the cusp point of the source hue leaf is adjusted to coincide with the cusp point of the destination hue leaf. Then, the remaining colors of the source hue leaf that are outside the destination hue leaf are gamut mapped in a clipping process.

For gamut mapping between, for example, a display and a color printer, the International Color Consortium (ICC), which is a color management standardization group, has standardized a technique of using a different gamut mapping method according to a rendering intent. The ICC recommends that a hue preserved minimum Delta E (HPMINDE) gamut mapping method should be used for a relative colormetric intent and that a sigmodial gaussian lightness mapping, cusp & knee (SGCK) gamut mapping method should be used for a perceptual intent.

However, if a natural color image on a display is output by a printer, which is a destination device, using the HPMINDE gamut mapping method or the SGCK gamut mapping method, the natural color image is distorted.

SUMMARY

Additional aspects and/or advantages of the invention will be set forth in part in the description which follows and, in part, will be apparent from the description, or may be learned by practice of the invention.

It is an aspect of the present invention to enable a destination device to reproduce the color of a source device as similar as possible to the original color of the source device by adjusting the color gamut of the source device to that of the destination device.

It is another aspect of the present invention to prevent the generation of contours and paling of a pure color.

It is another aspect of the present invention to enable a destination device to output a visually and sensually preferable image by adjusting the shape of the color gamut of a source device and the compression rate for gamut mapping according to hue characteristics.

However, the aspects of the present invention are not restricted to the one set forth herein. The above and/or other aspects of the present invention will become more apparent to one of daily skill in the art to which the present invention pertains by referencing a detailed description of the present invention given below.

According to an aspect of the present invention there is provided a method of performing gamut mapping between heterogeneous devices according to claim 1.

According to another aspect of the present invention there is provided an apparatus to perform gamut mapping between heterogeneous devices according to claim 8.

BRIEF DESCRIPTION OF THE DRAWINGS

These and/or other aspects and advantages of the invention will become apparent and more readily appreciated from the following description of the embodiments, taken in conjunction with the accompanying drawings of which:

  FIG. 1 illustrates a conventional hue preserved minimum delta E (HPMINDE) gamut mapping method;
  FIG. 2 illustrates a conventional sigmodial gaussian lightness mapping, cusp & knee (SGCK) gamut mapping method;
  FIG. 3 is a flowchart illustrating a method of compensating a shadow region according to an embodiment of the present invention;
  FIGS. 4A and 4B illustrate a sigmoid function and the distribution of weighting factors, which are used to scale lightness of a source device;
  FIG. 5 illustrates a color gamut of the source device which was adjusted by scaling lightness of the source device;
  FIG. 6 illustrates a color gamut of the source device which was modified by adjusting a cusp in the adjusted color gamut of the source device;
  FIG. 7 illustrates a color gamut of the source device modified using an offset;
  FIG. 8 illustrates an example of applying a different offset according to a hue;
  FIG. 9 illustrates a gamut mapping process according to an embodiment of the present invention;
  FIG. 10 illustrates an example of applying a different knee line according to a hue;
  FIG. 11 illustrates color gamut boundaries obtained using different gamut mapping methods;
  FIGS. 12A-12D illustrate images output using different gamut mapping methods; and
  FIG. 13 is a block diagram of an apparatus to perform gamut mapping between heterogeneous devices according to an embodiment of the present invention.

DETAILED DESCRIPTION OF THE PREFERRED EMBODIMENTS

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Like reference numerals in the drawings denote like elements, and thus their description will be omitted.

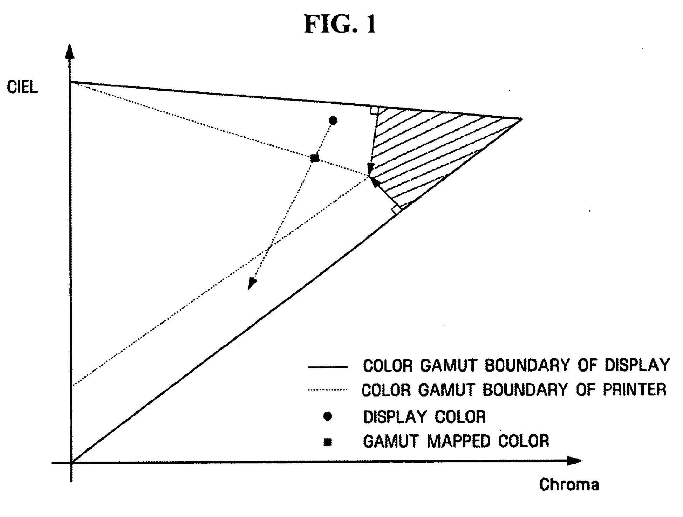

FIG. 1 illustrates a conventional hue preserved minimum delta E (HPMINDE) gamut mapping method.
Generally, a color gamut of a display is wider than that of a printer as illustrated in FIG. 1. Hence, not all colors from the display can be output by the printer. In the HPMINDE gamut mapping method, some of colors reproducible by the display, which fall outside the color gamut of the printer, are mapped to those having minimum color differences among colors reproducible by the printer. For example, referring to FIG. 1, a color of the display is outside the color gamut of the printer. If the color of the display is moved to a color having a minimum color difference, it may be mapped to a boundary line of the color gamut of the printer. However, if the color of the display is within the color gamut of the printer, it is not mapped and is maintained unchanged.
A drawback of the HPMINDE gamut mapping method is that colors in a region of the display, such as a hatched region in FIG. 1, is mapped to one gamut mapped color. Therefore, different colors on the display are output as the same color by the printer, thereby causing contours in an output image.

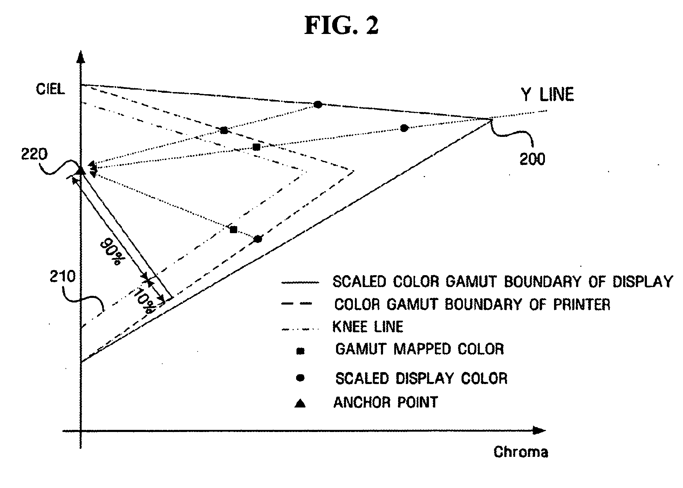

FIG. 2 illustrates a conventional sigmodial gaussian lightness mapping, cusp & knee (SGCK) gamut mapping method.
The conventional SGCK gamut mapping method may include an operation of scaling lightness of a color of a display and an operation of mapping the color with the scaled lightness.
Generally, a printer and a display have different lightness ranges. Therefore, the lightness of a color of the display color is scaled and thus adjusted in order to match the lightness range of a color gamut of the display with that of a color gamut of the printer.
In the color mapping operation, a color of the display may be compressed based on an anchor point 220. A knee line 210 is set at a position corresponding to 90 % of a distance from the anchor point 220 to a color gamut boundary of the printer. If a scaled display color is inside the knee line 210, it is maintained unchanged. However, if the scaled display color is outside the knee line 210, it may be mapped using a compression technique. The knee line 210 denotes a line formed by connecting points located at a position corresponding to a percent (%) version of the distance between the anchor point 220 and the color gamut boundary.
If a pure color with high chroma is reproduced using the SGCK gamut mapping method, it may be mapped to a color with low chroma. In particular, if pure colors around a cusp 200 in the color gamut of the display are mapped using the SGCK gamut mapping method, the printer may output colors with relatively significantly lower chroma. In other words, paled pure colors may be reproduced.

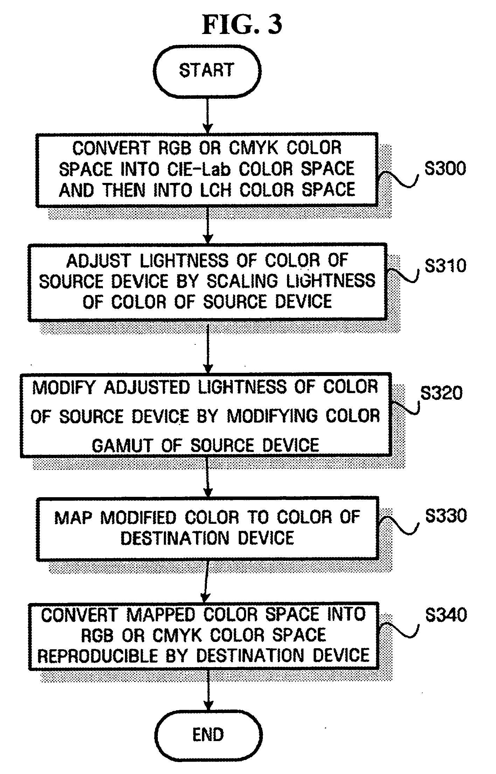

FIG. 3 is a flowchart illustrating a method of performing gamut mapping between heterogeneous devices according to an embodiment of the present invention.

Referring to FIG. 3, the method includes an operation of converting a color of a source device into a color in a color space having lightness, chroma and hue data (operation S300), an operation of scaling the lightness of a modified color based on a lightness range of a destination device (operation S310), modifying the scaled lightness of the color of the source device using a color gamut of the destination device (operation S320), an operation of mapping the color with the modified lightness to a color of the destination device (operation S330), and an operation of converting the color of the destination device into a color in a color space which can be output by the destination device (operation S340).

In the operation of converting the color of the source device into the color in the color space having lightness, chroma and hue components (operation S300), an input color signal of the source device is converted from a device-dependent color space, such as a red, green and blue (RGB) color space or a cyan, magenta, yellow and black (CMYK) color space, to a device-independent color space, such as a CIE-Lab color space, and then to a lightness, chroma and hue (LCH) coordinate system.

Specifically, an input color signal may be converted from the RGB or CMYK color space to the CIE-Lab color space. For such conversion, a standard chart may be color-measured using a colorimeter. Then, a mapping table between RGB or CMYK hues of the source device and CIE-Lab hues, which were color-measured by the colorimeter, may be created. Each of the CIE-Lab hues consists of luminosity, i.e., a lightness element L, and two tone elements a and b. Element a is positioned between green and red, and element b is positioned between blue and yellow.

After the RGB or CMYK color space is converted into the CIE-Lab color space, the CIE-lab color space may be converted into the LCH color space using a Lab value of the CIE-Lab color space as defined by Equation (1).

$$C = \sqrt{a^2 + b^2}$$
$$H = \tan^{-1}(b/a) \quad , \dots (1)$$

where C indicates chroma, and H indicates hue. In the case of lightness, a value of the lightness element L, which represents lightness of Lab, may be used.

In a similar way, input RGB or CMYK data of the source device may be converted into JCh data having lightness, chroma and hue components. A color space having the JCh data is called a CIECAMO2 color space. In order to convert the RGB or CMYK data into the JCh data, the RGB or CMYK data is converted into XYZ data using the colorimeter, and then the XYZ data is converted again into the JCh data. For more detailed conversion process, "IEC TC-1 00, IEC 61966-2-1, Color Management Default RGB Color Space sRGB (1999)" may be referred to.

In the operation of scaling the lightness of the modified color based on the lightness range of the destination device (operation S31 0), the lightness range of the source device is scaled to that of the destination device, thereby adjusting the lightness of the color of the source device.

If the lightness range of the source device is wider than that of the destination device, the lightness of the color of the source device is scaled down to be within the lightness range of the destination device. Such scaling may be performed using Equation (2).

$$L_{sc} = (1 - p_c)L_{or} + p_c L_s \quad \dots (2)$$

where $L_{sc}$ indicates scaled and adjusted lightness, $L_{or}$ indicates lightness of the color of the source device, and $L_s$ indicates lightness into which the lightness of the color of the source device was converted using a sigmoid function. In addition, $p_c$ indicates a weighting factor and may be given by Equation (3).

$$p_c = 1 - \sqrt{\frac{C^3}{C^3 + 500,000}} \quad \dots (3).$$

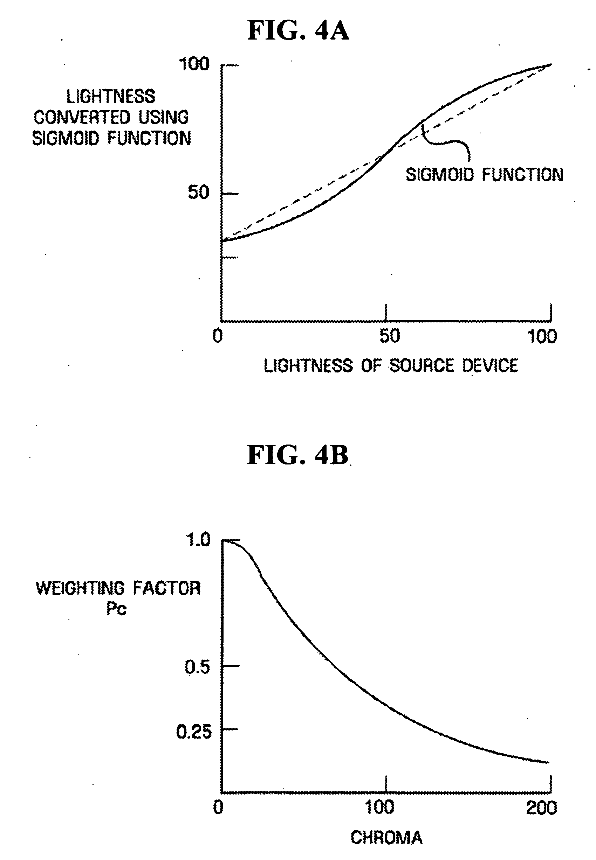

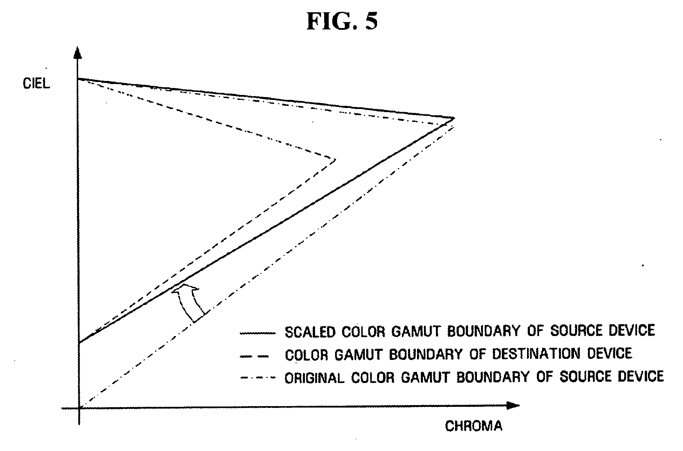

According to Equations (2) and (3), as chroma is closer to zero, $L_{sc}$ becomes closer to $L_s$, and as chroma

increases, $L_{sc}$ becomes more affected by $L_{or}$. In other words, as chroma is closer to zero, lightness is enhanced, and as chroma increases, the original lightness of an image is maintained. For example, if the lightness range of the source device is scaled using the sigmoid function and the weighting factor $p_c$ illustrated in FIGS. 4A and 4B, the lightness range of the color gamut of the source device is adjusted to that of the color gamut of the destination device as illustrated in FIG. 5. Then, the lightness of the color of the source device may be adjusted to be within the lightness range of the color gamut of the destination device using Equation (2).

After the scaling operation (operation S310), a height (lightness) of a cusp of the source device is matched with that of a cusp of the destination device, thereby modifying the adjusted lightness of the color of the source device (operation S320). The cusp denotes an apex having highest chroma in a color gamut.

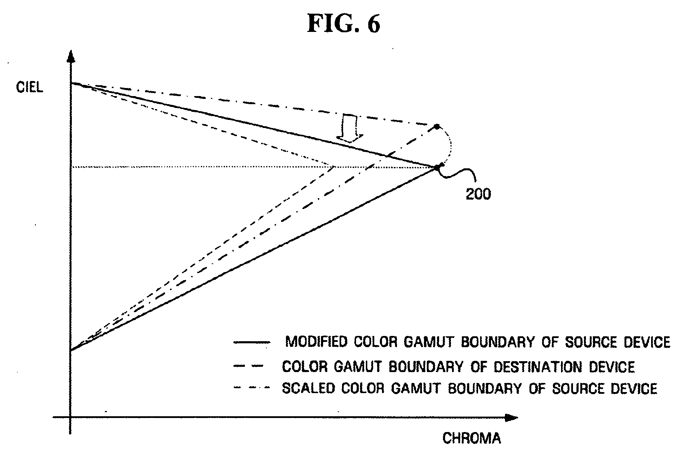

The color gamut of the source device may be modified by adjusting the position of the cusp of the source device to the position (lightness) of the cusp of the destination device. Accordingly, the lightness of the scaled color of the source device is modified. Such modification is performed to make a hue distribution of the source device similar to that of the destination device so that both devices produce similar color senses. Referring to FIG. 6, as a cusp 200 of the source device is adjusted, the color gamut of the source device is also adjusted. Therefore, a resultant color gamut of the source device has a similar shape to that of the color gamut of the destination device.

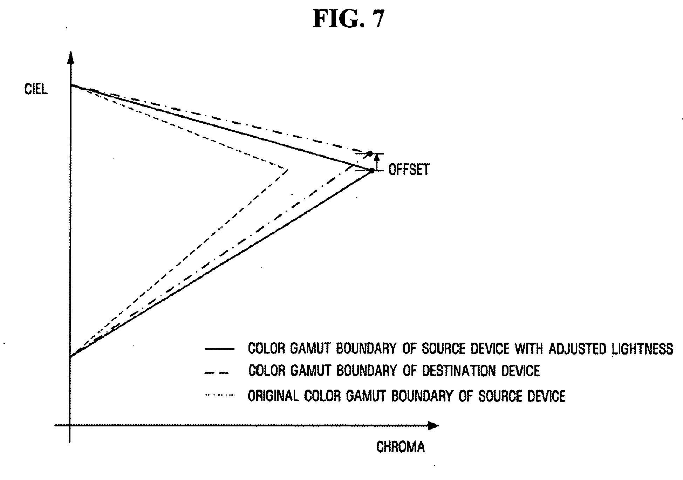

In another method of modifying the color gamut of the source device (operation S320), which is similar to the above method, an offset is used as illustrated in FIG. 7. Referring to FIG. 7, the lightness position of the cusp of the source device may be raised by the offset from the lightness position of the cusp of the destination device. Such adjustment is designed to prevent a pure color from being darkly reproduced when the pure color is mapped to a color of the destination device.

By adjusting the position of the cusp of the source device, the lightness of the color of the source device, which was adjusted in the scaling operation, can be modified. The adjusted lightness of the color of the source device may be modified using Equation (4).

$$L_{\mathrm{mod}} = L_{sc} \times ratio$$

$$ratio = 1 - \left( 1 - \frac{L_{pr\_cusp} + offset}{L_{sc\_cusp}} \right) \times \left( \frac{C_{sc}}{C_{sc\_cusp}} \right) \qquad , \ldots (4)$$

where $L_{\mathrm{mod}}$ indicates modified lightness, ratio indicates a modification ratio, $L_{sc\_cusp}$ indicates lightness of the adjusted cusp of the source device, and $L_{pr\_cusp}$ indicates lightness of the cusp of the destination device. In addition, $C_{sc}$ indicates chroma of the source device, $C_{sc\_cusp}$ indicates chroma of the cusp of the source device, and offset indicates the difference between the modified lightness of the cusp of the source device and the lightness of the cusp of the destination device.

The result of adjusting the color gamut of the source device using the offset is illustrated in FIG. 7. When the color gamut of the source device is adjusted using the offset, the color of the source device can be modified to become relatively brighter than when the color gamut of the source device is adjusted without using the offset.

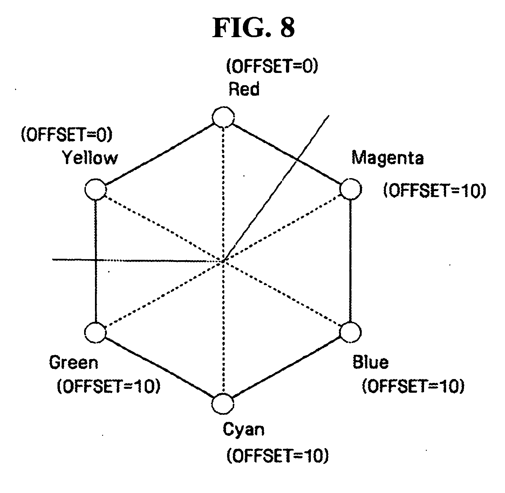

The size of the offset may vary according to a hue. For example, if pure colors reproduced by a printer, i.e., the destination device, are dark, such as green, cyan, blue and magenta, the offset may be set to a predetermined positive number (for example, ten as illustrated in FIG. 8). If the pure colors of the printer are bright, such as red and yellow, the offset may be set low (for example, zero as illustrated in FIG. 8). In addition, characteristics of each pure color of the destination device may be identified, and the offset may be set as a function. Then, different offsets may be applied to the pure colors, respectively.

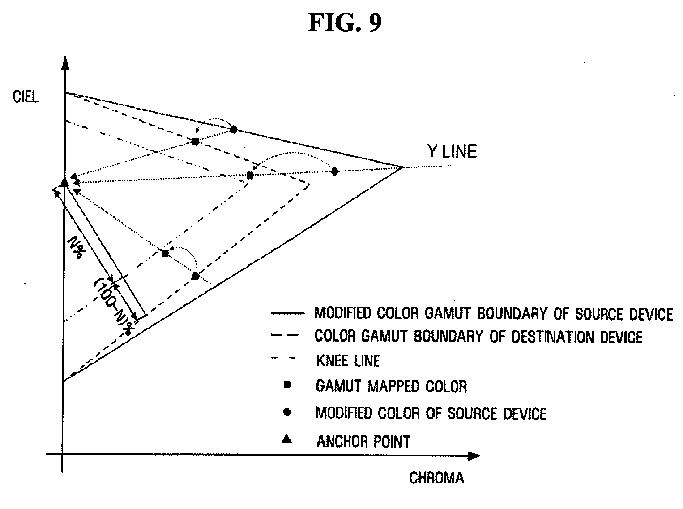

FIG. 9 illustrates a process of mapping a modified color of a source device to a color gamut of a destination device.

Referring to FIG. 9, a point having equal lightness to that of a cusp on a color gamut boundary of the destination device and having zero chroma is designated as an anchor point. A knee line is set at a position corresponding to N % of a distance from the set anchor point to the color gamut boundary of the destination device according to a hue.

If the modified color of the source device is inside the knee line, it is maintained unchanged. If the modified color of the source device is outside the knee line, it may be mapped using Equation (5) below.

$$d_{pr\_color} = N(\%)/100 \times d_{pr\_gb} + (100 - N)(\%)/100 \times \frac{(d_{di\_color} - N(\%)/100 \times d_{pr\_gb})}{(d_{di\_gb} - N(\%)/100 \times d_{pr\_gb})} \qquad , \ldots (5)$$

where d indicates the distance between a point on a $\gamma$ line and an anchor point. In addition, $d_{di\_color}$ indicates the distance between a modified color of the source device on the $\gamma$ line and the anchor point, $d_{di\_gb}$ indicates the distance between a modified color gamut boundary of the source device on the $\gamma$ line and the anchor point, $d_{pr\_gb}$ indicates the distance between the color gamut boundary of the destination device on the $\gamma$ line and the anchor point, and $d_{pr\_color}$ indicates the distance between the anchor point and a mapped color point on the $\gamma$ line. The modified color of the source device, which falls outside the knee line, may be mapped to a color located between the color gamut boundary of the destination device and the knee line using Equation (5) and the compression technique.

The setting of the knee line represents a compression range of the color gamut of the source device. For example, if the knee line is set to a position corresponding to 100 % of the distance from the anchor point to the color gamut boundary of the destination device, the set knee line is the same as the color gamut boundary of the destination device. In this case, the color gamut of the source device is compressed, a clipping effect can be obtained. Clipping denotes mapping a point outside the color gamut boundary of the destination device to a point at which a virtual line extending from the point outside the color gamut boundary of the destination device to the anchor point intersects the color gamut boundary of the destination device. Therefore, if the knee line matches the color gamut boundary of the destination device and if colors outside the knee line are mapped to colors in the color gamut of the destination device, the colors outside the knee line are all mapped to the color gamut boundary of the destination device.

On the other hand, if the knee line is set to a position corresponding to 20 % of the distance from the anchor point to the color gamut boundary of the destination device, a region inside the knee line is formed by connecting points located at the position corresponding to 80 % of the distance from the anchor point to the color gamut boundary of the destination device. Therefore, the modified color of the source device outside the knee line can be mapped to a color between the knee line and the color gamut boundary of the destination device, that is, 20 % of the distance from the color gamut boundary of the destination device to the anchor point.

Therefore, as illustrated in FIG. 9, three points representing modified colors of the source device may be mapped respectively to colors within the color gamut of the destination device. For mapping, the distance $d_{pr\_color}$ between the anchor point and a coordinate point of a mapped color may be calculated using Equation (5). Then, if a color is on the modified color gamut boundary of the source device, it may be mapped to the color gamut boundary of the destination device. If the modified color of the source device is on the color gamut boundary of the destination device, it may be modified to a color slightly outside the knee line.

In gamut mapping, a rate of the knee line may be vary according to a hue in order to consider hue characteristics of the destination device. For example, if the conventional HPMINDE or SGCK gamut mapping method is used, too reddish skin color may be output. In addition, a green grass region output by the destination device may be too saturated. In order to perform gamut mapping on yellow between red and green, a predetermined rate of the knee line may be set. For example, N may be in the range of 20 % through 50 %.

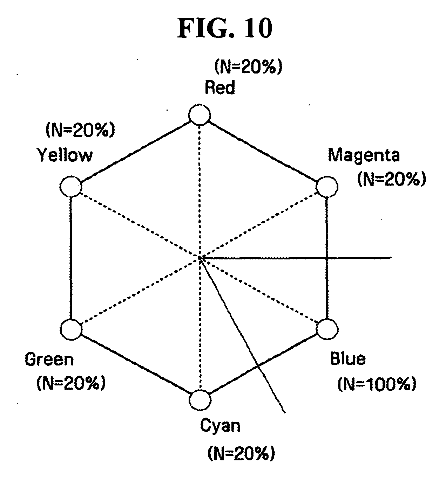

A blue region shows the greatest difference in color gamut when output by the display and when output by the printer. Therefore, if the compression technique is applied, the blue region may be darkly reproduced. However, if N is set to 100 %, bright blue may be reproduced. As for a color between blue and yellow, the knee line may be adjusted using a linear function so that the color can be naturally mapped. In this way, the rate of the knee line may be set differently by reflecting the characteristics of each hue as illustrated in FIG. 10.

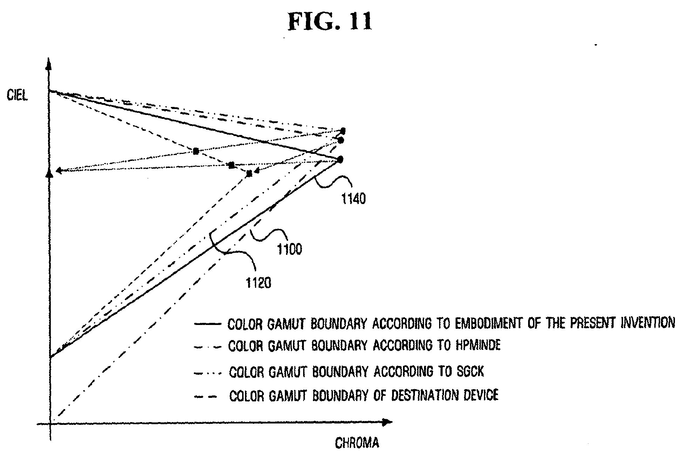

FIG. 11 illustrates color gamut boundaries obtained using different gamut mapping methods.

Referring to FIG. 11, a color gamut boundary 1100 obtained using the HPMINDE gamut mapping method corresponds to an original color gamut boundary of a source device. In the HPMINDE gamut mapping method, lightness is not scaled. Since a color of the source device is mapped to a color having a minimum color difference, points outside a color gamut of a destination device are all mapped to a color gamut boundary of the destination device. Furthermore, points around a cusp of the source device are all mapped to one cusp of the destination device, thereby causing contours. In the HPMINDE gamut mapping method, since colors outside the color gamut of the destination device are mapped to the color gamut boundary of the destination device, the colors outside the color gamut of the destination device are all expressed as a color on the color gamut boundary of the destination device, which has a minimum color difference. Consequently, different colors from the source device may frequently be reproduced as the same color by the destination device.

A color gamut boundary 1120 is obtained using the SGCK gamut mapping method. Since the color gamut boundary 1120 is adjusted by scaling lightness, a lightness range of the source device matches that of the destination device. In the SGCK gamut mapping method, gamut mapping is performed using the compression technique in color gamuts having the same lightness range. Referring to FIG. 11, if the cusp of the source device is gamut-mapped using the SGCK gamut mapping method, it is mapped to a point at which a virtual line extending from the cusp of the source device to an anchor point meets the color gamut boundary of the destination device. If the cusp of the source device, which corresponds to a pure color, is mapped, a paled pure color with significantly lower chroma may be reproduced.

A color gamut boundary 1140 obtained using the gamut mapping method according to the present invention is shaped relatively similar to that of the destination device since the lightness of the source device is scaled and then the lightness of the cusp of the source device is set equal to or higher, by an offset, than that of the destination device. After the modified color gamut boundary 1140 of the source device is obtained, gamut mapping is performed using the compression technique and based on the anchor point. Then, the destination device can represent a similar grayscale to that of the source device. In particular, the cusp of the source device can be mapped to a color slightly brighter and having lower chroma than the cusp of the destination device. Therefore, a pure color, which is not dark and has relatively high chroma, can be reproduced.

Referring to FIG. 3, a mapped color is converted into a color in a color space which can be output by the destination device (operation S340). The mapped color corresponds to a point in the LCH or CIECAMO2 color space having lightness, chroma and hue components. Therefore, the mapped color can be converted into a value of the RGB or CMYK color space output by the destination device. This operation is a reverse operation to the operation of converting a color of the source device into a color in the LCH color space.

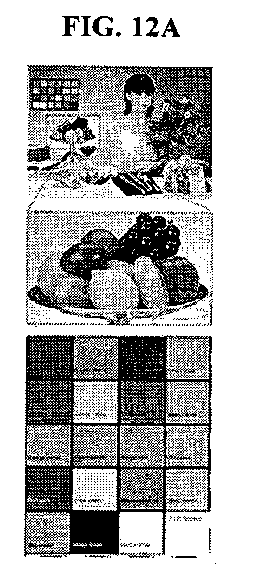

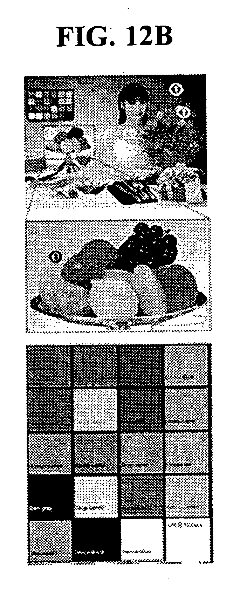

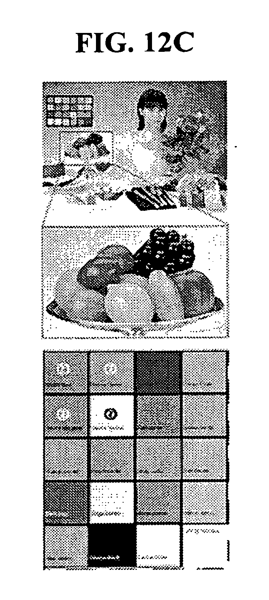

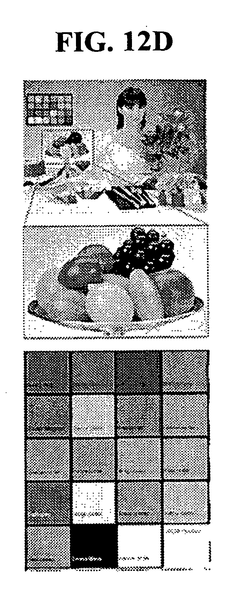

FIG. 12A-12D illustrate images output using different gamut mapping methods. FIG. 12A illustrates a display image, and FIG. 12B illustrates an image output using the conventional HPMINDE gamut mapping method. In addition, FIG. 12C illustrates an image output using the SGCK gamut mapping method, and FIG. 12D illustrates an image output using a gamut mapping method according to an embodiment of the present invention.

Referring to FIG. 12B, a converted color is concentrated in a region where red fruit is output, thereby causing contours in the image. In the image of FIG. 12C, a bright pure color with low chroma was not properly reproduced. In particular, pure colors such as red, green, yellow and yellowish green were not properly expressed. In addition, a skin color of a person reproduced in the images of FIGS. 12B and 12C is too reddish.

In the image of FIG. 12D, pure colors, such as red, green, yellow and yellowish green, were reproduced to have high lightness and chroma, and natural gradation without contours was expressed.

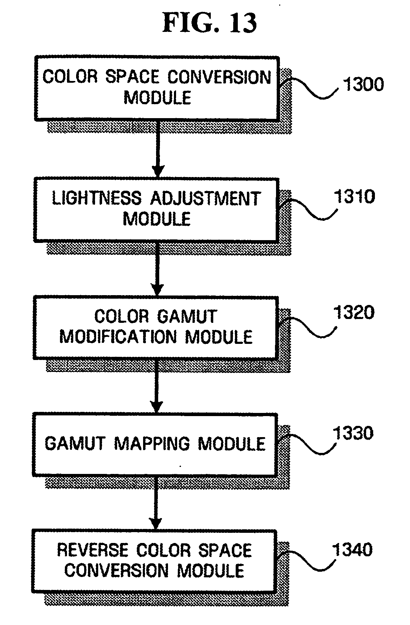

FIG. 13 is a block diagram of an apparatus to perform gamut mapping between heterogeneous devices according to an embodiment of the present invention.

Referring to FIG. 13, the apparatus includes a color space conversion module 1300, a lightness adjustment module 1310, a color gamut modification module 1320, a gamut mapping module 1330, and a reverse color space conversion module 1340.

The color space conversion module 1300 converts color data of a source device from an RGB or CMYK color space to an LCH or CIECAMO2 color space. In order to convert the RGB or CMYK color space into the LCH color space, the color space conversion module 1300 converts the color data from the RGB or CMYK color space into a CIE-Lab color space and then into an LCH coordinate system. Specifically, a mapping table between RGB or CMYK hues of the source device and CIE-Lab hues, which were color-measured by a colorimeter, may be created. Then, after the RGB or CMYK color space is converted into the CIE-Lab color space, the CIE-lab color space may be converted into the LCH color space using Equation (1).

In order to convert the RGB or CMYK color space into the CIECAMO2 color space, the RGB or CMYK data is converted into XYZ data using a mapping table, which was color-measured by the colorimeter, and then the XYZ data is converted into JCh data. Consequently, lightness, chroma and hue of a corresponding color can be obtained.

The lightness adjustment module 1310 scales the lightness of a converted color based on a lightness range of the destination device. The lightness adjustment module 1310 may scale a lightness range of the source device to that of the destination device using Equations (2) and (3). Consequently, the lightness adjustment module 1310 matches the lightness range of the color gamut of the source device with that of the color gamut of the destination device as illustrated in FIG. 5.

The color gamut modification module 1320 modifies the scaled lightness of the color of the source device by matching the height (lightness) of a cusp in a color gamut of the source device with that of a cusp of the destination device. In another modification method, the color gamut modification module 1320 may use an offset in order to prevent a pure color from being darkly mapped. Specifically, the color gamut modification module 1320 may set the height of the cusp of the source device higher than that of the cusp of the destination device by the offset. Then, points including the cusp of the source device may be multiplied by a ratio, which is calculated using Equation (4). As a result, the scaled lightness may be modified. In addition, the size of the offset may be adjusted according to hue characteristics, thereby adjusting the color gamut of the source device.

The gamut mapping module 1330 maps points in the color gamut of the source device modified by the color gamut modification module 1320, which are outside a knee line, to the color gamut of the destination device based on an anchor point. If the color of the source device, which was modified by the color gamut modification module 1320, is inside the knee line, it is maintained the same. If the modified color of the source device is outside the knee line, the distance from the anchor point to the color of the source device is calculated using Equation (5). As a result, a color to which the modified color of the source device is mapped can be obtained. The rate of the knee line may be adjusted so that the degree of compression applied to gamut mapping can be controlled according to a hue. The rate of the knee line may vary according to the hue characteristics.

The reverse color space conversion module 1340 converts points in a mapped color space into points in the RGB or CMYK color space which can be output by the destination device. This operation is a reverse operation to the operation of converting the color data in the RGB or CMYK color space into a point in the LCH or CIECAMO2 color space, which is performed by the color space conversion module 1300.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and the modules may be implemented to execute one or more central processing units (CPUs) in a device.

As described above, an aspect of the present invention provides at least one of the following advantages.

First, since a color gamut of a source device is scaled to become similar to that of a destination device, the destination device can express natural and smooth gradation.

Second, the generation of contours, which is a problem of the conventional HPMINDE gamut mapping method, and the reproduction of a paled pure color, which is a problem of the conventional SGCK gamut mapping method, can be prevented.

Third, since the size of an offset and a rate of a knee line are adjusted according to characteristics of each hue, the destination device can output a generally accurate and visually and sensually preferable image.

However, the effects of the present invention are not restricted to the one set forth herein. The above and other effects of the present invention will become more apparent to one of daily skill in the art to which the present invention pertains by referencing the claims of the present invention given below.

While the present invention has been particularly shown and described with reference to exemplary embodiments thereof, it will be understood by those of ordinary skill in the art that various changes in form and details may be made therein without departing from the spirit and scope of the present invention as defined by the following claims. The exemplary embodiments should be considered in descriptive sense only and not for purposes of limitation.

**Claims**

1. A method of performing gamut mapping between heterogeneous devices, the method comprising:

   (S300) converting an input red, green and blue (RGB) color space or a cyan, magenta, yellow and black (CMYK) color space of a source device into a Lab color space; and converting the Lab color space into a lightness, chroma and hue (LCH) color space

   (S310) scaling a lightness range of the source device to a lightness range of a destination device thereby adjusting the lightness of colors of the source device gamut;

   (S320) modifying the adjusted colors of the source device gamut by adjusting said gamut to a color gamut of the destination device; and

   (S330) mapping the modified colors of the source device gamut to colors in the color gamut of the destination device;

   wherein modifying the adjusted colors of the source device gamut comprises: modifying the lightness of the colors of the source device gamut, which were adjusted in the adjusting of the lightness of the colors, by adjusting the color gamut of the source device such that the cusp of the color gamut of the source device is moved to a position higher than the cusp of the color gamut of the destination device by a predetermined offset in a lightness direction;

   wherein a value of the predetermined offset varies according to the hue of the modified colors;

   wherein mapping the modified color comprises: for each modified color:

      maintaining the modified color unchanged if the modified color is inside a knee line of the destination device and

      mapping the modified color by compressing the modified color in proportion to a distance between the modified color and an anchor point if the modified color is outside the knee line of the destination device;

      wherein the anchor point is designated as a point having equal lightness to that of a cusp on a color gamut boundary of the destination device and having zero chroma;

      wherein the knee line is set at a position corresponding to N% of a distance from the set anchor point to the color gamut boundary of the destination device according to the hue of the modified color.

**2.** The method of claim 1, wherein adjusting lightness of the colors comprises adjusting the lightness of the color of the source device gamut by combining for each color

i) the lightness of the color of the source device, and
ii) the lightness into which the lightness of the color of the source device was converted using a sigmoid function and a weighting factor depending on the chroma of the color of the source device.

**3.** The method of claim 1, wherein the modifying adjusted lightness of the colors of the source device gamut comprises modifying the lightness of the colors of the source device gamut, which were adjusted in the adjusting lightness of the colors, by adjusting the color gamut of the source device such that a cusp of the color gamut of the source device matches a cusp of the color gamut of the destination device.

**4.** The method of claim 1, wherein a rate of the knee line varies according to the hue of the modified color.

**5.** The method of claim 1, further comprising:

(S340) converting a color from the LCH color space, which was mapped to be reproducible by the destination device, into the Lab color space; and
converting the Lab color space into the RGB or CMYK color space.

**6.** The method of claim 1, further comprising converting the input RGB or CMYK color space of the source device into a CIECAM02 color space having JCh data which is defined by lightness, chroma and hue.

**7.** The method of claim 6, further comprising converting the JCh data in the CIECAM02 color space, which was mapped to be reproducible by the destination device, into data in the RGB or CMYK color space.

**8.** An apparatus to perform gamut mapping between heterogeneous devices, the apparatus comprising:

a color space conversion module (1300) for converting an input RGB color space or a CMYK color space of a source device into a Lab color space and converting the Lab color space into an LCH color space;
a lightness adjustment module (1310) suitable for scaling a lightness range of the source device to the lightness range of a destination device thereby adjusting lightness of colors of the source device gamut;
a color gamut modification module (1320) for modifying the adjusted lightness of the colors of the source device gamut by adjusting said gamut to a color gamut of the destination device; and
a gamut mapping module (1330) for mapping the modified colors of the source device gamut to colors in the color gamut of the destination device;
wherein the color gamut modification module modifies the lightness of the colors of the source device gamut, which were adjusted by the lightness adjustment module (1310), by adjusting the color gamut of the source device such that the cusp of the color gamut of the source device is moved to a position higher than the cusp of the color gamut of the destination device by a predetermined offset in a lightness direction;
wherein a value of the predetermined offset varies according to the hue; and
wherein for each of the modified colors the gamut mapping module (1330)
maintains the modified color unchanged if the modified color is inside a knee line of the destination device, and maps the modified color by compressing the modified color in proportion to a distance between the modified color and an anchor point if the modified color is outside the knee line of the destination device;
wherein the anchor point is designated as a point having equal lightness to that of a cusp on a color gamut boundary of the destination device and having zero chroma;
wherein the knee line is set at a position corresponding to N% of a distance from the set anchor point to the color gamut boundary of the destination device according to the hue of the modified color.

**9.** The apparatus of claim 8, wherein the lightness adjustment module (1310) adjusts the lightness of the colors of the source device by combining for each color

i) the lightness of the color of the source device, and
ii) the lightness into which the lightness of the color of the source device was converted using a sigmoid function and a weighting factor depending on the chroma of the color of the source device.

**10.** The apparatus of claim 8, wherein the color gamut modification module (1320) modifies the lightness of the color of the source device gamut, which were adjusted by the lightness adjustment module (1310), by adjusting the color gamut of the source device such that a cusp of the color gamut of the source device gamut matches a cusp of the color gamut of the destination device.

**11.** The apparatus of claim 8, wherein a rate of the knee line varies according to the hue of the modified color.

**12.** The apparatus of claim 8, further comprising a reverse color space conversion module (1340) to convert a color from the LCH color space, which was mapped to be reproducible by the destination device, into the Lab color space and to convert the Lab color space into the RGB or CMYK color space.

**13.** The apparatus of claim 8, further comprising a color space conversion module (1300) to convert the input RGB or CMYK color space of the source device into a CIECAM02 color space having JCh data which is defined by lightness, chroma and hue.

**14.** The apparatus of claim 13, further comprising a reverse color space conversion module (1340) to convert the JCh data in the CIECAMO2 color space, which was mapped to be reproducible by the destination device, into data in the RGB or CMYK color space.

**Patentansprüche**

**1.** Ein Verfahren zum Durchführen von Gamut-Mapping zwischen heterogenen Geräten, das Verfahren umfassend:

(S300) Umwandeln eines Input Rot, Grün, und Blau (RGB) Farbraums oder eines Cyan, Magenta, Gelb und Schwarz (CMYK) Farbraums eines Quellgerätes in einen Lab-Farbraum, und Umwandeln des Lab-Farbraums in einen Helligkeit, Chroma und Farbton (LCH) Farbraum;
(S310) Skalieren eines Helligkeitsbereiches des Quellgerätes auf einen Helligkeitsbereich eines Zielgerätes, dabei Abstimmen der Helligkeit von Farben des Quellgerät-Gamuts;
(S320) Modifizieren der abgestimmten Farben des Quellgerät-Gamuts durch Abstimmen dieses Gamuts auf einen Farb-Gamut des Zielgerätes; und
(S330) Abbilden der modifizierten Farben des Quellgerät-Gamuts auf Farben in dem Farb-Gamut des Zielgerätes;
wobei Modifizieren der abgestimmten Farben des Quellgerät-Gamuts umfasst: Modifizieren der Helligkeit der Farben des Quellgerät-Gamuts, die durch das Abstimmen der Helligkeit der Farben abgestimmt wurden, durch Abstimmen des Farb-Gamuts des Quellgeräts derart, dass der Cusp des Farb-Gamuts des Quellgerätes um einen vorbestimmten Offset in Richtung einer Helligkeit auf eine Position höher als der Cusp des Farb-Gamuts des Zielgerätes bewegt wird;
wobei ein Wert des vorbestimmten Offsets entsprechend des Farbtons der modifizierten Farben variiert;
wobei Abbilden der modifizierten Farben umfasst: für jede modifizierte Farbe:

Unverändertes Halten der modifizierten Farbe, wenn die modifizierte Farbe innerhalb einer Knie-Linie des Zielgerätes ist; und
Abbilden der modifizierten Farbe durch Komprimieren der modifizierten Farbe im Verhältnis zu einer Entfernung zwischen der modifizierten Farbe und einem Ankerpunkt, wenn die modifizierte Farbe außerhalb der Knie-Linie des Zielgerätes ist;
wobei der Ankerpunkt bestimmt ist als ein Punkt mit einer Helligkeit gleich der eines Cusps auf einer Farb-Gamut-Grenze des Zielgerätes und mit null Chroma;
wobei die Knie-Linie an eine Position gesetzt ist, die N% einer Entfernung von dem gesetzten Ankerpunkt zur Farb-Gamut-Grenze des Zielgerätes entspricht gemäß dem Farbton der modifizierten Farbe.

**2.** Das Verfahren nach Anspruch 1, wobei Abstimmen von Helligkeit der Farben Abstimmen der Helligkeit der Farben des Quellgerät-Gamuts umfasst durch Kombinieren von für jede Farbe

i) der Helligkeit der Farbe des Quellgerätes, und
ii) der Helligkeit, auf welche die Helligkeit der Farbe des Quellgerätes umgewandelt wurde mit einer Sigmoid-Funktion und einem Gewichtsfaktor abhängend von der Chroma der Farbe des Quellgerätes.

**3.** Das Verfahren nach Anspruch 1, wobei das Modifizieren der abgestimmten Helligkeit der Farben des Quellgerät-Gamuts Modifizieren der Helligkeit der Farben des Quellgerät-Gamuts umfasst, die in dem Abstimmen der Helligkeit der Farben abgestimmt wurden durch Abstimmen des Farb-Gamuts des Quellgerätes derart, dass ein Cusp des Farb-Gamuts des Quellgerätes einem Cusp des Farb-Gamuts des Zielgerätes entspricht.

**4.** Das Verfahren nach Anspruch 1, wobei eine Rate der Knie-Linie entsprechend dem Farbton der modifizierten Farbe variiert.

**5.** Das Verfahren nach Anspruch 1, weiter umfassend:

(S340) Umwandeln einer Farbe von dem LCH Farbraum, die abgebildet wurde, um durch das Zielgerät reproduzierbar zu sein, in den Lab-Farbraum; und
Umwandeln des Lab-Farbraums in den RGB oder CMYK Farbraum.

**6.** Das Verfahren nach Anspruch 1, weiterhin umfassend Umwandeln des Input RGB oder CMYK Farbraumes des Quellgerätes in einem CIECAM02 Farbraum mit JCh Daten, der durch Helligkeit, Chroma und Farbton definiert ist.

**7.** Das Verfahren nach Anspruch 6, weiterhin umfassend Umwandeln der JCh Daten in dem CIECAM02 Farbraum, der abgebildet wurde, um durch das Zielgerät reproduzierbar zu sein, in Daten in dem RGB oder CMYK Farbraum.

**8.** Vorrichtung zum Durchführen von Gamut-Mapping zwischen heterogenen Geräten, die Vorrichtung umfassend:

ein Farbraum-Umwandlungs-Modul (1310) geeignet zum Umwandeln eines RGB Farbraums oder eines CMYK Farbraums eines Quellgerätes in einen Lab-Farbraum, und Umwandeln des Lab-Farbraums in einen LCH Farbraum;
ein Helligkeits-Abstimmungs-Modul (1310) geeignet zum Skalieren eines Helligkeitsbereiches des Quellgerätes auf einen Helligkeitsbereich eines Zielgerätes, dabei Abstimmen der Helligkeit von Farben des Quellgerät-Gamuts;
ein Farb-Gamut-Modifizierungs-Modul (1320) zum Modifizieren der abgestimmten Farben des Quellgerät-Gamuts durch Abstimmen dieses Gamuts auf einen Farb-Gamut des Zielgerätes; und
ein Gamut-Mapping-Modul (1330) zum Abbilden der modifizierten Farben des Quellgerät-Gamuts auf Farben in dem Farb-Gamut des Zielgerätes;
wobei das Farb-Gamut-Modifizierungs-Modul die Helligkeit der Farben des Quellgerät-Gamuts, die durch das Abstimmen der Helligkeit der Farben abgestimmt wurden, modifiziert durch Abstimmen des Farb-Gamuts des Quellgeräts derart, dass der Cusp des Farb-Gamuts des Quellgerätes um einen vorbestimmten Offset in Richtung einer Helligkeit auf eine Position höher als der Cusp des Farb-Gamuts des Zielgerätes bewegt wird;
wobei ein Wert des vorbestimmten Offsets entsprechend des Farbtons variiert, und
wobei für jede der modifizierten Farben das Farb-Gamut-Modifizierungs-Modul (1330)
die modifizierte Farbe unverändert lässt, wenn die modifizierte Farbe innerhalb einer Knie-Linie des Zielgerätes liegt, und
die modifizierte Farbe abbildet durch Komprimieren der modifizierten Farbe im Verhältnis zu einer Entfernung zwischen der modifizierten Farbe und einem Ankerpunkt, wenn die modifizierte Farbe außerhalb der Knie-Linie des Zielgerätes ist;
wobei der Ankerpunkt bestimmt ist als ein Punkt mit einer Helligkeit gleich der eines Cusps auf einer Farb-Gamut-Grenze des Zielgerätes und mit null Chroma
wobei die Knie-Linie an eine Position gesetzt ist, die N% einer Entfernung von dem gesetzten Ankerpunkt zur Farb-Gamut-Grenze des Zielgerätes entspricht gemäß dem Farbton der modifizierten Farbe.

**9.** Die Vorrichtung nach Anspruch 8, wobei das Helligkeits-Abstimmungs-Modul (1310) die Helligkeit der Farben des Quellgerätes abstimmt durch Kombinieren von für jede Farbe

i) der Helligkeit der Farbe des Quellgerätes, und
ii) der Helligkeit, auf die die Helligkeit der Farbe des Quellgerätes umgewandelt wurde mit einer Sigmoid-Funktion und einem Gewichtsfaktor abhängend von der Chroma der Farbe des Quellgerätes.

**10.** Die Vorrichtung nach Anspruch 8, wobei Farb-Gamut-Modifizierungs-Modul (1320) die Helligkeit der Farbe des Quellgerät-Gamuts modifiziert, die in dem Abstimmen der Helligkeit der Farben abgestimmt wurde durch Abstimmen des Farb-Gamuts des Quellgerätes derart, dass ein Cusp des Farb-Gamuts des Quellgerätes einem Cusp des Farb-Gamuts des Zielgerätes entspricht.

**11.** Vorrichtung nach Anspruch 8, wobei eine Rate der Knie-Linie entsprechend dem Farbton der modifizierten Farbe variiert.

**12.** Vorrichtung nach Anspruch 8, ferner mit einem Farbraum-Rückumwandlungs-Modul (1340) zum Umwandeln einer Farbe von dem LCH Farbraum, die abgebildet wurde, um durch das Zielgerät reproduzierbar zu sein, in den Lab-Farbraum und Umwandeln des Lab-Farbraums in den RGB oder CMYK Farbraum.

**13.** Vorrichtung nach Anspruch 8, ferner mit einem Farbraum-Umwandlungs-Modul (1300) zum Umwandeln des Input RGB oder CMYK Farbraums des Quellgerätes in einen CIECAM02 Farbraum mit JCh Daten, der durch Helligkeit, Chroma und Farbton definiert ist.

**14.** Vorrichtung nach Anspruch 13, ferner mit einem Farbraum-Rückumwandlungsmodul (1340) zum Umwandeln der JCh Daten in dem CIECAM02 Farbraum, der abgebildet wurde, um durch das Zielgerät reproduzierbar zu sein, in Daten in dem RGB oder CMYK Farbraum.

**Revendications**

**1.** Procédé de réalisation d'un mappage de gamme de couleurs entre des dispositifs hétérogènes, le procédé comprenant :

(S300) la conversion d'un espace colorimétrique d'entrée rouge, vert et bleu (RVB) ou d'un espace colorimétrique cyan, magenta, jaune et noir (CMJN) d'un dispositif source en un espace colorimétrique Lab ; et la conversion de l'espace colorimétrique Lab en un espace colorimétrique luminance, chrominance et teinte (soit Lightness, Chroma and Hue, ou LCH) ;
(S310) la graduation d'une plage de luminance du dispositif source en fonction d'une plage de luminance d'un dispositif de destination, moyennant quoi la luminance des couleurs de la gamme du dispositif source est ajustée ;
(S320) la modification des couleurs ajustées de la gamme du dispositif source en ajustant ladite gamme à une gamme de couleurs du dispositif de destination ; et
(S330) le mappage des couleurs modifiées de la gamme du dispositif source par rapport à des couleurs de la gamme du dispositif de destination ;
dans lequel la modification des couleurs ajustées de la gamme du dispositif source comprend : la modification de la luminance des couleurs de la gamme du dispositif source, qui sont ajustées en ajustant la luminance des couleurs, en ajustant la gamme de couleurs du dispositif source de telle sorte que le sommet de la gamme de couleurs du dispositif source est déplacé jusqu'à une position plus élevée que le sommet de la gamme de couleurs du dispositif de destination selon un décalage prédéterminé dans une direction de luminance ;
dans lequel la valeur du décalage prédéterminé varie en fonction de la teinte des couleurs modifiées ;
dans lequel le mappage de la couleur modifiée comprend pour chaque couleur modifiée :

le maintien inchangé de la couleur modifiée si la couleur modifiée se trouve à l'intérieur d'une ligne d'inflexion du dispositif de destination, et
le mappage de la couleur modifiée en compressant la couleur modifiée proportionnellement à une distance entre la couleur modifiée et un point d'ancrage si la couleur modifiée se trouve à l'extérieur de la ligne d'inflexion du dispositif de destination ;
dans lequel le point d'ancrage est désigné comme étant un point présentant une luminance égale à celle d'un sommet sur une délimitation de gamme de couleurs du dispositif de destination et ayant une chrominance nulle ;
dans lequel la ligne d'inflexion est établie à une position correspondant à N % d'une distance du point d'ancrage établi jusqu'à la délimitation de gamme de couleurs du dispositif de destination en fonction de la teinte de la couleur modifiée.

**2.** Procédé selon la revendication 1, dans lequel l'ajustement de la luminance des couleurs comprend l'ajustement de la luminance de la couleur de la gamme du dispositif source en combinant pour chaque couleur

i) la luminance de la couleur du dispositif source, et
ii) la luminance dans laquelle la luminance de la couleur du dispositif source a été convertie en utilisant une fonction sigmoïde et un facteur de pondération dépendant de la chrominance de la couleur du dispositif source.

**3.** Procédé selon la revendication 1, dans lequel la modification de la luminance ajustée des couleurs de la gamme du dispositif source comprend la modification de la luminance des couleurs de la gamme du dispositif source, qui ont été ajustées en ajustant la luminance des couleurs, en ajustant la gamme de couleurs du dispositif source de telle sorte qu'un sommet de la gamme de couleurs du dispositif source correspond à un sommet de la gamme de couleurs du dispositif de destination.

**4.** Procédé selon la revendication 1, dans lequel un taux de la ligne d'inflexion varie en fonction de la teinte de la couleur modifiée.

**5.** Procédé selon la revendication 1, comprenant en outre :

(S340) la conversion d'une couleur de l'espace colorimétrique LCH, qui a été mappée pour être reproductible par le dispositif de destination, dans l'espace colorimétrique Lab ; et
la conversion de l'espace colorimétrique Lab en espace colorimétrique RVB ou CMJN.

**6.** Procédé selon la revendication 1, comprenant en outre la conversion de l'espace colorimétrique RVB ou CMJN d'entrée du dispositif source en un espace colorimétrique CIECAM02 ayant des données JCh qui sont définies par la luminance, la chrominance et la teinte.

**7.** Procédé selon la revendication 6, comprenant en outre la conversion des données JCh dans l'espace colorimétrique CIECAM02, qui ont été mappées pour être reproductibles par le dispositif de destination, en des données de l'espace colorimétrique RVB ou CMJN.

**8.** Appareil pour réaliser un mappage de gamme de couleurs entre des dispositifs hétérogènes, l'appareil comprenant :

un module de conversion d'espace colorimétrique (1300) pour convertir un espace colorimétrique RVB d'entrée ou un espace colorimétrique CMJN d'un dispositif source en un espace colorimétrique Lab, et pour convertir l'espace colorimétrique Lab en un espace colorimétrique LCH ;
un module d'ajustement de luminance (1310) adapté pour graduer une plage de luminance du dispositif source par rapport à une plage de luminance d'un dispositif de destination, ajustant ainsi la luminance des couleurs de la gamme du dispositif source ;
un module de modification de gamme de couleurs (1320) pour modifier la luminance ajustée des couleurs de la gamme du dispositif source en ajustant ladite gamme à une gamme de couleurs du dispositif de destination ; et
un module de mappage de gamme de couleurs (1330) pour mapper les couleurs modifiées de la gamme du dispositif source par rapport à des couleurs de la gamme du dispositif de destination ;
dans lequel le module de modification de gamme de couleurs modifie la luminance des couleurs de la gamme du dispositif source, qui ont été ajustées par le module d'ajustement de luminosité (1310), en ajustant la gamme de couleurs du dispositif source de telle sorte que le sommet de la gamme de couleurs du dispositif source est déplacé jusqu'à une position plus élevée que le sommet de la gamme de couleurs du dispositif de destination selon un décalage prédéterminé dans une direction de luminosité ;
dans lequel une valeur du décalage prédéterminé varie en fonction de la teinte ; et
dans lequel, pour chacune des couleurs modifiées, le module de mappage de gamme de couleurs (1330) maintient inchangée la couleur modifiée si la couleur modifiée se trouve à l'intérieur d'une ligne d'inflexion du dispositif de destination, et
mappe la couleur modifiée en compressant la couleur modifiée proportionnellement à une distance entre la couleur modifiée et un point d'ancrage si la couleur modifiée se trouve en dehors de la ligne d'inflexion du dispositif de destination ;
dans lequel le point d'ancrage est désigné comme étant un point présentant une luminance égale à celle d'un sommet sur une délimitation de gamme de couleurs du dispositif de destination et ayant une chrominance nulle ;
dans lequel la ligne d'inflexion est établie à une position correspondant à N % d'une distance du point d'ancrage établi jusqu'à la délimitation de gamme de couleurs du dispositif de destination en fonction de la teinte de la couleur modifiée.

**9.** Appareil selon la revendication 8, dans lequel le module d'ajustement de luminance (1310) ajuste la luminance des couleurs du dispositif source en combinant pour chaque couleur

i) la luminance de la couleur du dispositif source, et
ii) la luminance dans laquelle la luminance de la couleur du dispositif source a été convertie en utilisant une fonction sigmoïde et un facteur de pondération dépendant de la chrominance de la couleur du dispositif source.

**10.** Appareil selon la revendication 8, dans lequel le module de modification de gamme de couleurs (1320) modifie la luminance des couleurs de la gamme du dispositif source, qui ont été ajustées par le module d'ajustement de luminosité (1310), en ajustant la gamme de couleurs du dispositif source de telle sorte qu'un sommet de la gamme de couleurs du dispositif source correspond à un sommet de la gamme de couleurs du dispositif de destination.

**11.** Appareil selon la revendication 8, dans lequel un taux de la ligne d'inflexion varie en fonction de la teinte de la couleur modifiée.

**12.** Appareil selon la revendication 8, comprenant en outre un module de conversion d'espace colorimétrique inverse (1340) pour convertir une couleur de l'espace colorimétrique LCH, qui a été mappée pour être reproductible par le dispositif de destination, dans l'espace colorimétrique Lab, et pour convertir l'espace colorimétrique Lab en espace colorimétrique RVB ou CMJN.

**13.** Appareil selon la revendication 8, comprenant en outre un module de conversion d'espace colorimétrique (1300) pour convertir l'espace colorimétrique RVB ou CMJN d'entrée du dispositif source en un espace colorimétrique CIECAM02 ayant des données JCh qui sont définies par la luminance, la chrominance et la teinte.

**14.** Appareil selon la revendication 13, comprenant en outre un module de conversion d'espace colorimétrique inverse (1340) pour convertir les données JCh dans l'espace colorimétrique CIECAM02, qui ont été mappées pour être reproductibles par le dispositif de destination, en des données de l'espace colorimétrique RVB ou CMJN.

# FIG. 1

COLOR GAMUT BOUNDARY OF DISPLAY
COLOR GAMUT BOUNDARY OF PRINTER
● DISPLAY COLOR
■ GAMUT MAPPED COLOR

# FIG. 2

CIEL

Y LINE

220

200

90%

10%

210

——— SCALED COLOR GAMUT BOUNDARY OF DISPLAY
— — COLOR GAMUT BOUNDARY OF PRINTER
—·—·· KNEE LINE
■ GAMUT MAPPED COLOR
● SCALED DISPLAY COLOR
▲ ANCHOR POINT

Chroma

# FIG. 3

START

↓

CONVERT RGB OR CMYK COLOR
SPACE INTO CIE-Lab COLOR SPACE    S300
AND THEN INTO LCH COLOR SPACE

↓

ADJUST LIGHTNESS OF COLOR OF
SOURCE DEVICE BY SCALING LIGHTNESS    S310
OF COLOR OF SOURCE DEVICE

↓

MODIFY ADJUSTED LIGHTNESS OF COLOR
OF SOURCE DEVICE BY MODIFYING COLOR    S320
GAMUT OF SOURCE DEVICE

↓

MAP MODIFIED COLOR TO COLOR OF    S330
DESTINATION DEVICE

↓

CONVERT MAPPED COLOR SPACE INTO    S340
RGB OR CMYK COLOR SPACE
REPRODUCIBLE BY DESTINATION DEVICE

↓

END

## FIG. 4A

LIGHTNESS
CONVERTED USING
SIGMOID FUNCTION

SIGMOID FUNCTION

LIGHTNESS OF SOURCE DEVICE

## FIG. 4B

WEIGHTING FACTOR
Pc

CHROMA

# FIG. 5

—————— SCALED COLOR GAMUT BOUNDARY OF SOURCE DEVICE
— — COLOR GAMUT BOUNDARY OF DESTINATION DEVICE
—·—·· ORIGINAL COLOR GAMUT BOUNDARY OF SOURCE DEVICE

CIEL

CHROMA

# FIG. 6

MODIFIED COLOR GAMUT BOUNDARY OF SOURCE DEVICE

COLOR GAMUT BOUNDARY OF DESTINATION DEVICE

SCALED COLOR GAMUT BOUNDARY OF SOURCE DEVICE

# FIG. 7

—— COLOR GAMUT BOUNDARY OF SOURCE DEVICE WITH ADJUSTED LIGHTNESS
– – COLOR GAMUT BOUNDARY OF DESTINATION DEVICE
······ ORIGINAL COLOR GAMUT BOUNDARY OF SOURCE DEVICE

# FIG. 8

# FIG. 9

MODIFIED COLOR GAMUT BOUNDARY OF SOURCE DEVICE
COLOR GAMUT BOUNDARY OF DESTINATION DEVICE
KNEE LINE
GAMUT MAPPED COLOR
MODIFIED COLOR OF SOURCE DEVICE
ANCHOR POINT

# FIG. 10

(N=20%)
Red

(N=20%)
Yellow

Magenta
(N=20%)

Green
(N=20%)

Blue
(N=100%)

Cyan
(N=20%)

## FIG. 11

1140

1100

1120

—— COLOR GAMUT BOUNDARY ACCORDING TO EMBODIMENT OF THE PRESENT INVENTION

—·— COLOR GAMUT BOUNDARY ACCORDING TO HPMINDE

—···· COLOR GAMUT BOUNDARY ACCORDING TO SGCK

—— COLOR GAMUT BOUNDARY OF DESTINATION DEVICE

CIEL

CHROMA

# FIG. 12A

# FIG. 12B

# FIG. 12C

# FIG. 12D

# FIG. 13

```
┌─────────────────────────────┐
│  COLOR SPACE CONVERSION      │──── 1300
│         MODULE              │
└─────────────────────────────┘
              │
              ▼
┌─────────────────────────────┐
│   LIGHTNESS ADJUSTMENT       │──── 1310
│         MODULE              │
└─────────────────────────────┘
              │
              ▼
┌─────────────────────────────┐
│      COLOR GAMUT            │──── 1320
│   MODIFICATION MODULE       │
└─────────────────────────────┘
              │
              ▼
┌─────────────────────────────┐
│   GAMUT MAPPING MODULE      │──── 1330
└─────────────────────────────┘
              │
              ▼
┌─────────────────────────────┐
│    REVERSE COLOR SPACE       │──── 1340
│   CONVERSION MODULE         │
└─────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060096300
- WO 2005109856 A